Europäisches Patentamt

(19) European Patent Office

Office européen des brevets

(11) Numéro de publication: **0 084 281**
**B1**

(12) **FASCICULE DE BREVET EUROPEEN**

(45) Date de publication du fascicule du brevet:
**19.06.85**

(21) Numéro de dépôt: **82402225.5**

(22) Date de dépôt: **06.12.82**

(51) Int. Cl.⁴: **F 27 D 17/00, C 03 B 5/23**

(54) Perfectionnements à la construction de fours à régénérateurs.

(30) Priorité: **08.01.82 FR 8200185**

(43) Date de publication de la demande:
**27.07.83 Bulletin 83/30**

(45) Mention de la délivrance du brevet:
**19.06.85 Bulletin 85/25**

(84) Etats contractants désignés:
**BE CH DE FR GB IT LI LU NL SE**

(56) Documents cités:
**FR - A - 479 289**
**US - A - 1 718 331**
**US - A - 1 882 992**
**US - A - 1 941 419**

(73) Titulaire: **SOCIETE EUROPEENNE DES PRODUITS REFRACTAIRES, Les Miroirs 18, Avenue d'Alsace, F-92400 Courbevoie (FR)**

(72) Inventeur: **Blanchet, Pierre, 4, Avenue du Square Coubertin, F-92100 Boulogne (FR)**
Inventeur: **Recasens, Joseph, 24, Rue Saint-Hubert, F-84700 Sorgues (FR)**

(74) Mandataire: **de Boisse, Louis, 37, Avenue Franklin D. Roosevelt, F-75008 Paris (FR)**

## Description

L'invention concerne des perfectionnements à la construction de fours à régénérateurs.

Les fours à régénérateurs sont de deux types : les fours à brûleurs transversaux et les fours à boucle.

On connaît bien les fours à brûleurs transversaux et à régénérateurs. Dans ce type de fours, les brûleurs de taille relativement grande et en petit nombre sont disposés face à face sur les côtés du four et fonctionnent alternativement, les brûleurs d'un des côtés étant allumés, alors que ceux situés de l'autre côté sont éteints. Les fumées chaudes s'échappent par les conduits des brûleurs éteints et viennent échauffer les empilages du régénérateur. Après inversion des brûleurs, ces empilages chauds sont utilisés pour réchauffer l'air de combustion amené aux brûleurs en fonction tandis que les fumées sont utilisées pour réchauffer les empilages du régénérateur associés aux brûleurs éteints, et einsi de suite.

Les fours à brûleurs transversaux et à régénérateurs sont utilisés notamment en verrerie, particulièrement dans de grosses unités de fabrication de bouteilles ou de verre plat.

Dans les fours à brûleurs transversaux et à régénérateurs, l'air de combustion arrive dans le four par des conduits de brûleurs en maçonnerie qui sont reliés aux parties hautes régénérateurs. Un certain nombre d'injecteurs placés sous la banquette de brûleur, dans sa voûte ou sur les côtes, permettent l'arrivée du combustible (gaz ou fuel lourd). Les flammes sont du type »flammes de diffusion« dissymétriques, l'air et le combustible arrivant séparément en faisant un certain angle entre eux.

Cette technologie classique présente un certain nombre d'inconvénients que l'on peut résumer comme suit:

— Les conduits de brûleurs en maçonnerie sont séparés les uns des autres par des espaces morts pouvant atteindre 2 mètres et parfois plus. Comme les flammes se développent à peu près sur la largeur de ces conduits, il en résulte que seule une partie de la surface du bain de verre est couverte par les flammes — habituellement 30 à 45%.

Or l'échange thermique et donc le rendement de combustion et, par là, la consommation du four dépendent de ce pourcentage couvert par les flammes.

— Les flammes rayonnent sur la partie des régénérateurs située au-dessus des empilages.

Ceci est dû à un angle solide relativement grand des conduits de brûleurs (ceux-ci vont en s'évasant du four vers le régénérateur). La chaleur ainsi perdue représente environ 3% de la chaleur sensible des fumées, mais, contrairement à cette dernière, elle n'est pour ainsi dire pas récupérable.

La construction des conduits de brûleurs est compliquée:

voûte clavée, armaturage lourd. . .

Ceci se traduit par l'obligation d'utiliser, pour le montage, une main-d'oeuvre importante et spécialement formée ainsi qu'un matériel adapté (cintres). Par ailleurs, ces conduits sont très difficiles à calorifuger et »l'effet d'arêtes« joue un rôle non négligeable dans les déperditions.

— La largeur des pénétrations de ces conduits dans les régénérateurs est faible comparée à la longueur totale des murs recevant ces pénétrations. Ceci se traduit par de nombreux espaces morts et une mauvaise répartition des fumées dans les empilages, donc abaisse le rendement des régénérateurs.

Enfin, du fait du nombre réduit de brûleurs de puissance élevée, les conduits sont géométriquement mal adaptés à la chambre du four, ce qui cause une mauvaise répartition des fluides (air, combustible) entraînant à son tour une baisse de rendement qui est d'autant plus importante que la chambre est grande.

Les fours à brûleurs transversaux et à régénérateurs ont des consommations en combustible assez élevées, typiquement de l'ordre de 1300 mth par kg de verre.

En raison du coût croissant des produits pétroliers, il existe un besoin constant d'amélioration du rendement thermique des fours afin de diminuer leur consommation en combustible.

Quant aux fours à boucle, ils comprennent deux brûleurs équipés chacun d'un ou plusieurs injecteurs de combustible, les deux brûleurs étant placés côte à côte sur un même côté du four. Chaque brûleur fonctionne à son tour et la flamme provenant d'un premier brûleur se développe suivant un trajet en forme de fer à cheval, en revenant vers le second brûleur, formant ainsi une boucle. Les fumées s'échappent par le conduit de ce dernier et traversent une chambre de régénération en perdant une partie des calories qu'elles contiennent au contact de l'empilage. Lorsque c'est au tour du second brûleur de fonctionner, l'air de combustion va se réchauffer au contact de 'empilage et la flamme suivant un trajet contraire au précédent va se développer jusqu'au premier brûleur, les fumées réchauffant à leur tour l'empilage associé au premier brûleur, et ainsi de suite. Ce type de fours est économique (consommation typiquement de l'ordre de 1100 mth/kg de verre), mais de capacité plus restreinte que les fours à brûleurs transversaux. Les conduits de brûleurs de fours sont construits d'une façon similaire à celle utilisée pour les conduits des fours à brûleurs transversaux et à régénérateurs, c'est-à-dire avec une voûte clavée.

Les fours à boucle sont généralement utilisés pour la production de bouteilles.

L'invention a pour objet d'apporter des perfectionnements à la construction des fours à régénérateurs.

Plus particulièrement, l'invention concerne des fours à régénérateurs des genres sus-mentionnés, dont les conduits de brûleurs présentent chacun, en section transversale, une forme générale carrée ou rectangulaire, la partie supérieure ou couverture de chaque conduit étant réalisée à l'aide d'éléments monotithiques en matière réfractaire de portée suffisante pour que chaque élément supérieur repose à ses extrémités sur les éléments en matière réfractaire formant les parois latérales des conduits, ces éléments latéraux reposant eux-mêmes sur des éléments en matière réfractaire formant la sole des conduits. Avantageusement, les éléments formant les parois latérales de deux conduits consécutifs sont communs à ces deux conduits dans le cas des fours à brûleurs transversaux.

De préférence, les éléments en matière réfractaire présentent des surface planes et des formes simples.

Les conduits de brûleurs selon l'invention seront en général d'une taille sensiblement inférieure à celle des conduits de brûleurs classiques. Par contre, du fait du mode de construction employé, il est possible d'utiliser un nombre de brûleurs beaucoup plus élevé, pour une longueur de four donnée. Par exemple, alors qu'un four de fusion classique à brûleurs transversaux et à régénérateurs, d'une longueur de 10—13 m et d'une largeur de 6—8 m, comporte habituellement de 4 à 6 paires de brûleurs, un four de fusion selon l'invention, de taille semblable, comportera 15 à 20 paires de brûleurs. Le fait que les brûleurs de l'invention peuvent être disposés de façon rapprochée offre un avantage technique important, à savoir de permettre d'assurer un taux de couverture de flamme d'au moins 55%, de préférence d'au moins 60%.

Par »couverture de flamme«, on entend la surface du bain (verre fondu) couverte par les flammes sortant des brûleurs en supposant que chaque flamme a la largeur du brûleur dont elle est issue et une longueur égale à la largeur du bain. Dans la réalité, les flammes ont une forme légèrement divergente et la couverture de flamme réelle est supérieure à celle calculée en respectant l'hypothèse susdite.

Le mode de construction des conduits de brûleurs selon l'invention est plus simple que la construction en voûte clavée et peut être réalisée rapidement à l'aide d'éléments à surface planes de forme relativement simple et avec une main-d'oeuvre moins qualifiée que le mode de construction en voûte clavée qui nécessite l'emploi de cintres et une main-d'oeuvre spécialement formée. En outre, une telle construction, de forme plus simple, permet un calorifugeage plus poussé qu'avec la construction classique (forme plus simple, moins d'arêts), une meilleure répartition des fumées dans les cerveaux (parties supérieures libres) de chambres des régénérateurs et donc une amélioration du rendement des régénérateurs, ainsi qu'une réduction des pertes par rayonnement du laboratoire (espace au-dessus du verre fondu) vers les cerveaux de chambre par suite de la fermeture de l'angle solide ayant pour base la surface totale de pénétration dans la chambre et comme rayon la longueur des conduits de brûleurs.

Les perfectionnements de l'invention permettent de réaliser des économies de combustible de l'ordre de 5 à 10% sur les fours à brûleurs transversaux et à régénérateurs.

Les avantages principaux décrits pour les fours àbrûleurs transversaux sont valables également dans le cas des fours à boucle à l'exeption de l'accroissement du taux de couverture de flamme. Les problèmes d'armaturage des brûleurs sont nettement simplifiés. En jouant sur les hauteurs de potelets intermédiaires (éléments latéraux), il est possible d'agir sur la répartition de l'air secondaire entre l'axe longitudinal et la rive du four, ce qui peut être avantageux dans le cas d'un four à boucle.

La description qui va suivre en regard des dessins annexés, donnée à titre d'exemple non limitatif, fera bien comprendre comment l'invention peut être réalisée, les particularités qui ressortant tant du dessin que du texte faisant bien entendu partie de ladite invention.

La figure 1 est une vue partielle, en coupe longitudinale, d'un à verre de construction classique.

La figure 2 est une vue partielle en perspective d'un four à verre perfectionné selon l'invention.

La figure 3 est une vue en coupe longitudinale d'un conduit de brûleur du four de la figure 2.

Les figures 4a, 4b et 4c sont des vues de dessus, en bout et de côté, respectivement, d'un des éléments en matière réfractaire formant les parties supérieure et inférieure conduit de brûleur de la figure 3; et

la figure 5 est une vue schématique comparant les couvertures de flamme des fours des figures 1 et 2.

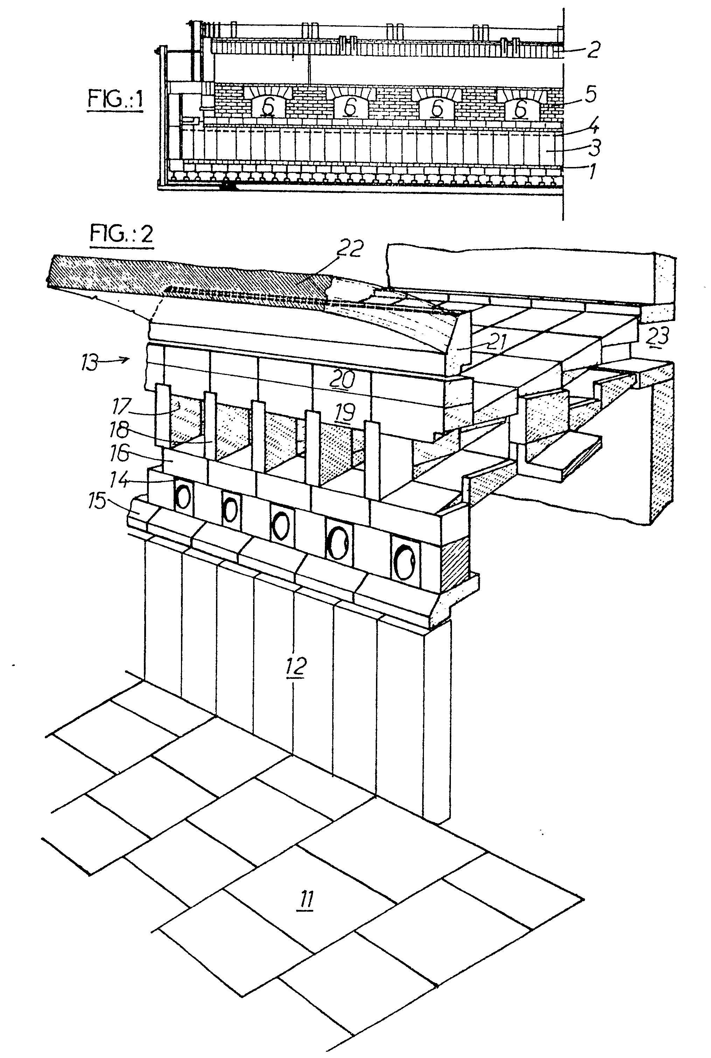

Sur la figure 1 est illustré un four à verre à brûleurs transversaux de construction classique. Ce four comprend une sole 1, une voûte 2, une paroi latérale 3 de cuve située au-dessous de la ligne de verre 4 et une paroi latérale de superstructure (piedroit) 5 située au-dessus de cette ligne. Des conduits de fumées 6 en maçonnerie sont prévus le long de la superstructure 5 et débouchent dans les cerveaux des régénérateurs (non représentés). Des injecteurs (non représentés) placés dans la voûte des conduits, sous les conduits, ou sur leurs côtés, permettent l'arrivée du combustible (gaz ou fuel lourd). Les flammes sont du type »flamme de diffusion« dissymétrique, l'air et le combustible arrivant séparément en faisant un certain angle entre eux. Les conduits 6 sont voûtés. Pour un four dont la cuve de fusion a une longueur de 10 m environ et une largeur de 7 m environ, il y a typiquement quatre conduits 6 sur chacun des côtés de la superstructure. La largeur de chaque conduit est typiquement de 1,3 m pour une hauteur de l'ordre de 0,5 m.

Dans ce type de four classique:

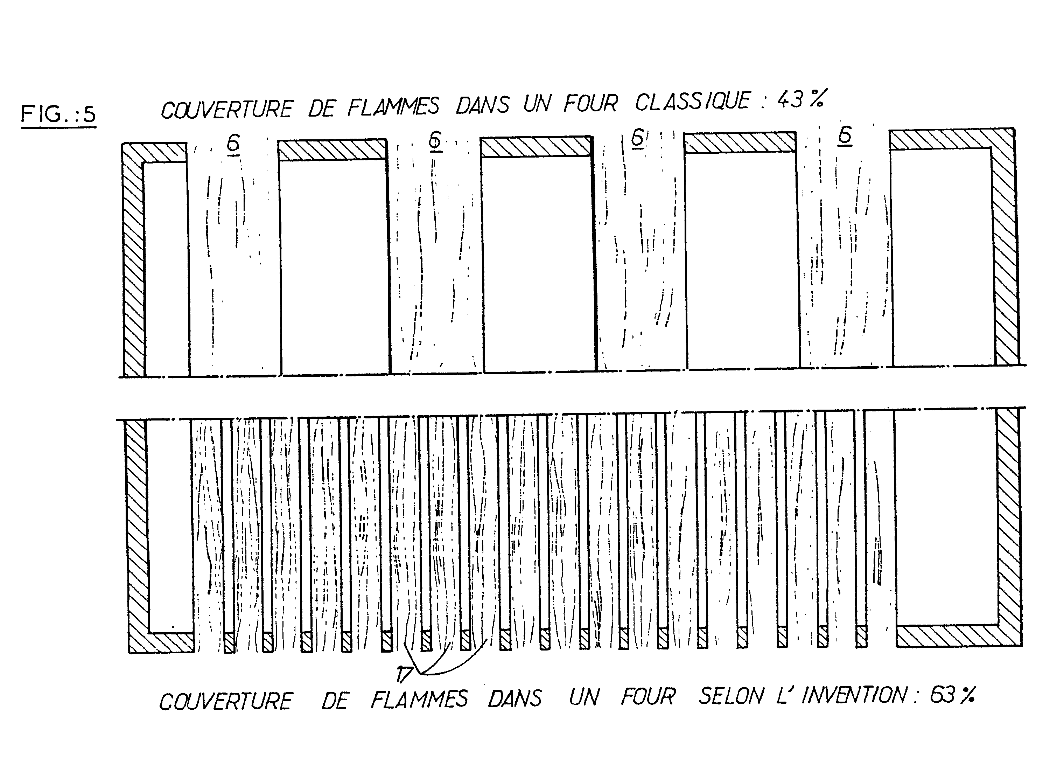

— les conduits 6 en maçonnerie sont séparés les uns des autres par des espaces morts importants, ce qui fait que la couverture de flamme d'un tel four est relativement faible, de l'ordre de 43% comme l'illustre la figure 5, partie gauche, ce qui fait que l'échange thermique entre les flammes et le verre, et donc le rendement de combustion, sont médiocres, entraînant une consommation du four relativement élevée;

— les flammes rayonnent fortement sur la partie des régénérateurs située au-dessus des empilages par suite de l'angle solide relativement grand des conduits 6, qui vont en s'évasant du four vers le régénérateur. La chaleur ainsi perdue n'est pratiquement pas récupérable;

— la construction des conduits de fumées est compliquée: voûte clavée, armaturage lourd, etc... En outre, ces conduits sont difficiles à calorifuger et »l'effet d'arêtes« joue un rôle notable dans les déperditions;

— la largeur de pénétration des conduits de fumée dans les régénérateurs est faible comparée à la longueur totale des murs les recevant. Ceci se traduit par de nombreux espaces morts et une mauvaise répartition des fumées dans les empilages des régénérateurs, et donc abaisse le rendement de ceux-ci.

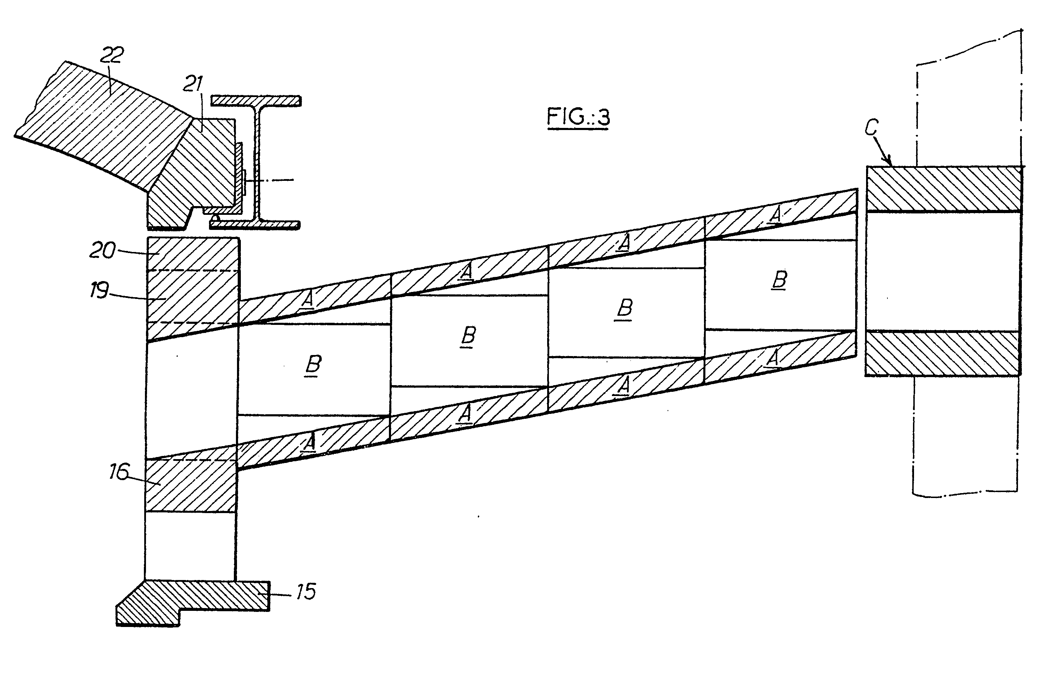

La figure 2 montre, de façon partielle, un four perfectionné conforme à la présente invention, dont la cuve de fusion a une taille semblable à celle du four de la figure 1. Ce four comprend une sole 11, une paroi latérale 12 délimitant la cuve et formée de blocs réfractaires et une superstructure 13. La superstructure 13 comprend à sa base des blocs injecteurs 14 reposant sur des briques à nez 15, une banquette 16, des conduits de brûleurs 17 prévus au-dessus de la banquette et séparés les uns des autres par des potelets 18 (éléments latéraux). A la partie supérieure de la superstructure se trouvent des linteaux 19, des éléments de complément 20, un sommier 21 supportant la voûte 22. Les conduits 17 débouchent, à leur partie arrière, dans un cerveau 23 de régénérateur. Il convient de noter que les éléments réfractaires constituant la banquette 16 et les linteaux 19 sont identiques. Ce four comporte dix-huit conduits de brûleurs identiques sur chacun de ses côtès, seulement cinq de ces conduits étant représentés pour des raisons de commodité. Ces conduits ont une section rectangulaire (largeur 0,4 m; hauteur 0,45 m) proche du carré, constante sur toute leur longueur. On pourrait toutefois prévoir un accroissement de section, dans le sens vertical, des conduits au voisinage des pénétrations C dans les cerveaux (figure 3). La largeur des poteletes 18 est de 0,15 m. Les conduits 17 sont inclinés, par exemple de 11°, par rapport à l'horizontale, de façon que l'air de combustion réchauffé arrivant par les conduits 17 heurte le courant de combustible injecté par les injecteurs 14 et permette la combustion de ces derniers. Les flammes sont du type »flamme de diffusion« dissymétrique, comme dans le cas du four classique.

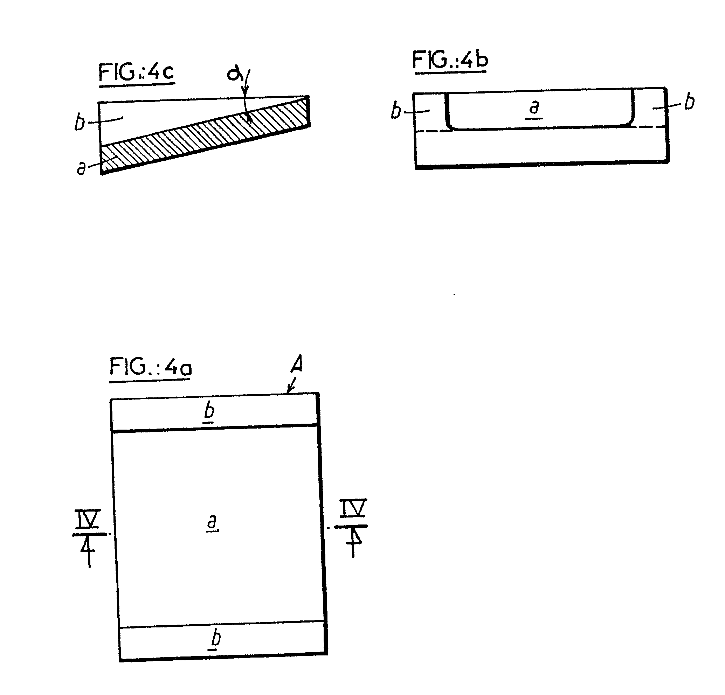

Les figures 3 et 4 illustrent de façon plus détaillée la construction des conduits de brûleurs. La sole et la couverture de chacun de ces conduits sont formés à l'aide d'éléments monolithiques réfractaires A tels que celui représenté en détail sur les figures 4a, 4b et 4c. Ces éléments présentent une partie centrale plane a et deux ailes b en forme de triangle rectangle et perpendiculaires à la partie centrale. Le petit angle a dudit triangle est égal par exemple à 11°. Des éléments latéraux réfractaires ou poteles B, de forme parallélépipédique, forment les parois latérales du conduit, venant reposer sur les ailes b des éléments A de la sole et supportant les ailes b des éléments A de la couverture. Les potelets B sont disposés dans l'alignement des potelets 18 de façade, derrière ceux-ci.

Le four de l'invention présente une couverture de flamme bien supérieure à celle du four classique. Cette couverture est de 63% environ, comme l'illustre la figure 5, partie droite.

Cette amélioration de la couverture de flamme se traduit par une amélioration des échanges thermiques avec le bain de verre fondu et permet de réduire consommation du four.

Par ailleurs, le four de l'invention est plus simple et rapide à construire qu'un four classique, ne nécessitant pas l'emploi des cintres requis pour la réalisation des voûtes clavées. En effet, l'invention ne fait appel, pour la construction des conduits de brûleurs, qu'à un petit nombre d'éléments de forme simple et standardisée.

D'autres avantages sont

— possibilité d'un calorifugeage beaucoup plus poussé du fait d'une forme plus simple et de la présence de moins d'arêtes;

— meilleure répartition des fumées dans les cerveaux de régénérateurs et, donc, amélioration du rendement de ceux-ci;

— reduction des pertes par rayonnement du laboratoire vers les cerveaux par fermeture de l'angle solide ayant pour base la surface totale de pénétration dans la chambre et comme rayon la longueur des conduits. Le flux lumineux dans les conduits d'un four selon l'invention est égal à environ la moitié du flux lumineux dans un four classique;

— augmentation du nombre d'injecteurs (fuel ou gaz) permettant une meilleure maîtrise des longueurs de flamme et, si besoin est, d'accroîte la limite maximale des débits calorifiques.

Le type de four selon l'invention pourrait également être employé en métallurgie.

**Revendications**

1. Four à régénérateurs, caractérisé en ce qu'il comporte des conduits de brûleurs (17) présentant chacun, en section transversale, une forme générale carrée ou rectangulaire, la partie supérieure ou couverture de chaque conduit étant réalisée à l'aide d'éléments monolithiques (A) en matière réfractaire, de portée suffisante pour que chaque élément supérieur repose à ses extrémités sur les éléments (B) en matière réfractaire formant les parois latérales des conduits, ces éléments latéraux reposant eux-mêmes sur des éléments (A) en matière réfractaire formant la sole des conduits.

2. Four selon la revendication 1, caractérisé en ce qu'il est un à brûleurs transversaux.

3. Four selon la revendication 2, caractérisé en ce que les éléments formant les parois latérales de deux conduits consécutifs sont communs à deux conduits.

4. Four selon la revendication 2 ou 3, caractérisé en ce qu'il présente un taux de couverture de flamme d'au moins 55%.

5. Four selon la revendication 4, caractérisé en ce que ledit taux est d'au moins 60%.

6. Four selon l'une quelconque des revendications 1 à 5, caractérisé en ce que la sole et la couverture de chaque conduit de brûleur sont constituées à partir d'éléments réfractaires moulés comprenant une partie centrale plane (a) et deux ailes (b) en forme de triangle rectangle et perpendiculaires à la partie centrale.

7. Four selon la revendication 1, caractérisé en ce qu'il est un four à boucle.

**Patentansprüche**

1. Regenerationsofen, dadurch gekennzeichnet, daß der Regenerationsofen Brennerleitungen (17) aufweist, von denen jede einen im wesentlichen quadratischen oder rechteckigen Querschnitt aufweist, daß der obere Teil oder die Decke jeder Brennerleitung aus einem monolithischen Element (A) aus einem feuerfesten Stoff mit ausreichender Tragfähigkeit besteht, daß jedes obere Element mit seinen Enden auf zwei Elementen (B) aus feuerfestem Material ruht, die die seitlichen Wände der Brennerleitungen bilden und daß die seitlichen Elemente wiederum auf Elementen (A) aus einem feuerfesten Stoff ruhen, die den Boden der Brennerleitungen bilden.

2. Ofen nach Anspruch 1, dadurch gekennzeichnet, daß der Ofen mit transversalen Brennern versehen ist.

3. Ofen nach Anspruch 2, dadurch gekennzeichnet, daß die Elemente, die die seitlichen Wände zweier aufeinanderfolgender Leitungen bilden, diesen beiden Leitungen gemeinsam sind.

4. Ofen nach Anspruch 2 oder 3, dadurch gekennzeichnet, daß dieser einen Flammenabdeckungsgrad von wenigstens 75% aufweist.

5. Ofen nach Anspruch 4, dadurch gekennzeichnet, daß der Flammenabdeckungsgrad wenigstens 60% beträgt.

6. Ofen nach einem der Ansprüche 1 bis 5, dadurch gekennzeichnet, daß der Boden und die Decke einer jeden Brennerleitung aus gegossenen, feuerfesten Elementen bestehen, die einen mittigen ebenen Teil (a) und zwei Schenkel (b) in Form eines rechtwinkligen Dreiecks aufweisen, die senkrecht zu dem zentralen Teil (a) angeordnet sind.

7. Ofen nach Anspruch 1, dadurch gekennzeichnet, daß der Ofen ein U-Flamme-ofen ist.

**Claims**

1. A regenerator furnace characterised in that it comprises burner pipes (17) each presenting a generally square or rectangular transverse cross-section, the upper part or cover of each pipe being constituted by monolithic elements (A) of refractory material of a span sufficient that each cover element rests with its ends on elements (B) of refractory material forming the side walls of the pipes, which side elements themselves rest on elements (A) of refractory material forming the base of the pipes.

2. A furnace according to claim 1, characterised in that it is a transverse-burner furnace.

3. A furnace according to claim 2, characterised in that the elements forming the side walls of two consecutive pipes are common to those pipes.

4. A furnace according to claim 2 or 3, characterised in that the furnace has a flame coverage rate of at least 55%.

5. A furnace according to claim 4, characterised in that the flame coverage rate is at least 60%.

6. A furnace according to any one of claims 1 to 5, characterised in that the base and the cover of each burner pipe are constituted by moulded refractory elements comprising a flat central part (a) and two wings (b) in the form of a right-angled triangle and perpendicular to the central part.

7. A furnace according to claim 1, characterised in that it is a loop furnace.

0 084 281

FIG.:1

FIG.:2

7

FIG.:3

FIG.:4c

FIG.:4b

FIG.:4a

FIG.:5

COUVERTURE DE FLAMMES DANS UN FOUR CLASSIQUE : 43 %

COUVERTURE DE FLAMMES DANS UN FOUR SELON L'INVENTION : 63 %